# EUROPEAN PATENT SPECIFICATION

(11) **EP 0 689 923 B1**
(45) Date of publication and mention of the grant of the patent: **22.09.1999**
(21) Application number: 95201568.3
(22) Date of filing: 13.06.1995
(51) Int. Cl.: B29C 45/27

(54) **A nozzle for the injection moulding of plastics materials**
Düse zum Spritzgiessen von Kunststoffen
Buse pour mouler par injection les matières plastiques

(30) Priority: 29.06.1994 IT MI941351
(43) Date of publication of application: 03.01.1996
(73) Proprietor: CO.M.AT.-DME S.p.A., I-20131 Milano (IT)
(72) Inventor: Destro, Claudio, I-20052 Monza (Milano) (IT)
(74) Representative: Perani, Aurelio

(56) References cited:
- EP-A- 0 283 001
- EP-A- 0 326 016
- PATENT ABSTRACTS OF JAPAN vol. 13 no. 252 (M-836) [3600] ,12 June 1989 & JP-A-01 058518 (FANUC)
- PATENT ABSTRACTS OF JAPAN vol. 15 no. 416 (M-1172) ,23 October 1991 & JP-A-03 176113 (NISSEI PLASTICS IND CO)
- PATENT ABSTRACTS OF JAPAN vol. 9 no. 286 (M-429) [2009] ,13 November 1985 & JP-A-60 127124 (MATSUSHITA DENKI SANGYO)

## Description

The present invention relates to a nozzle for the injection moulding of plastics materials, including a tubular body through which the plastics material to be injected is intended to flow and on the outer surface of which extends the wire of a wire thermocouple, and an electrical resistance mounted exteriorly around the tubular body. Such nozzles are known e.g. from EP-A-0326016

In order to better explain the matter of the invention cited above, it is appropriate briefly to mention how plastics injection moulding technology (see for example the Perucca engineering dictionary under this item) provides for molten material to be introduced into a mould in which the shape of the object to be manufactured is formed, mounted on an appropriate press; this material is introduced through one or more nozzles variously positioned around the outline of the mould.

In order for the moulding operation to proceed correctly, it is vital that the plastics material reaches every region of the mould; this occurs only if the molten plastics does not cool excessively in contact with the inner walls of the mould while it advances inside it; should this happen, the viscosity of the plastics would increase so as to reach values preventing correct penetration of all the spaces and hollows to be filled.

Various stratagems are used to achieve this result: that is to prevent the temperature of the injected plastics from falling below a predetermined value, but we will not go into them here; it is necessary, however, to indicate the vital importance of the injection temperature of the molten plastics among the parameters for controlling this aspect of the production process.

Current practice in the art is to determine the temperature of the plastics to be injected by measuring the temperature of the injection nozzle by means of a wire thermocouple fitted to the outer wall of the tubular body thereof. It should be noted that the phrase "wire thermocouple" is used here, as by experts in the art, to mean a temperature-measuring device operating according to the well known thermoelectric properties of certain materials; in the specific case of the application under consideration, the temperature measuring devices have a wire end portion operable to measure the temperature and which can be applied to the tubular body of the nozzle.

In addition, electrical resistances are arranged around the tubular body for heating the nozzle to the temperature required for injecting; these resistances are supplied in a conventional manner and their operation is usually controlled by a special system, operating on the basis of the temperatures measured by the thermocouple.

It must also be specified that the aforesaid resistances are essentially of two types, a first constituted by a sleeve force-fitted onto the tubular body of the nozzle, the second constituted by a conductor cable in a helical coil around the outer surface of the said tubular body.

As stated earlier, a direct consequence of the critical importance of the injection temperature of the plastics material is that measuring this temperature is extremely important for the correct performance of the moulding process; a disadvantage of the prior art nozzles of which we have given a broad structural description above consists precisely in the fact that the thermocouples they are provided with are not sufficiently reliable.

It must indeed be appreciated that in order to mount the resistance on the tubular body without interfering with the thermocouple wire, the latter is inserted in a special groove formed in the outside of the tubular body and having dimensions, especially its radial depth with respect to the body itself, greater than those of the thermocouple wire. This involves fixing the wire in some way so that it is prevented from becoming detached from the wall of the tubular body as a result of vibrations occurring during moulding; it is clear that should this happen, temperature readings would not correspond to the real operating parameters of the system and would, in any case, be measured discontinuously during operation, leading to serious problems.

It should in any case be underlined that attachment of the wire is difficult since, as will be explained better in relation to the invention, it must not interfere with the moulding function of the nozzle; among the various factors which contribute to the difficulty of the fixing operation, we need only mention the lack of space as a result of the presence of the resistance.

In order to overcome this disadvantage, one solution currently available in the art involves forming an inclined hole extending towards the axis of the nozzle; this hole is intended to house the sensor end of the thermocouple wire and at the same time to prevent any slippage in the groove. It must be recognised that positioning the end of the thermocouple in the hole makes it possible to measure temperatures closer to the axis of the nozzle and therefore closer to the actual state of the plastics material to be injected.

However, this arrangement does not give entirely satisfactory results either since, in the long term, it displays substantially the same problems described above due to faulty contact of the thermocouple, caused by the aforesaid vibrations and the heat cycles affecting the nozzle.

The object of the present invention is to overcome the said disadvantage by providing a nozzle for the injection moulding of plastics materials of the type discussed above, having structural and operating characteristics which permit the temperature of the plastics material flowing through it to be measured accurately.

In particular, this object is achieved by a nozzle having the characteristics described in Claim 1 of the claims which follow this description.

Further aspects of the invention will be more fully understood with reference to a description of an embodiment, provided purely by way of non-limitative example, with reference to the appended drawings; in these latter:

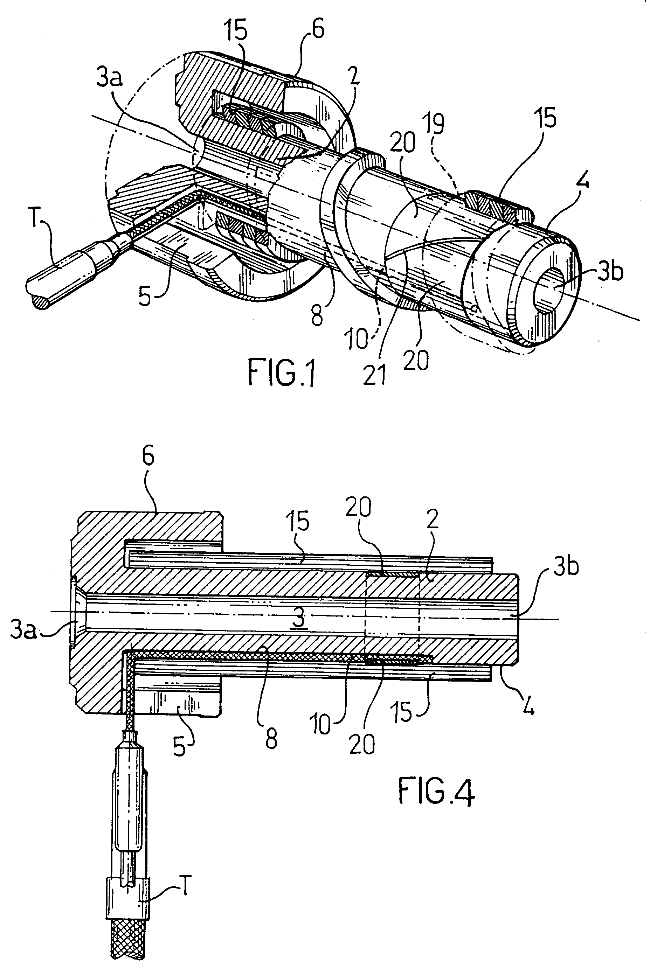

Figure 1 is a partially sectioned perspective view of a nozzle according to the invention;
Figure 2 is a side view of the nozzle of Figure 1;
Figure 3 is a longitudinal section through the nozzle of the preceding figures; and
Figure 4 is a longitudinally sectioned view of a variant of the nozzle shown in Figures 1 to 3.

With reference therefore to the drawings listed above, a nozzle in its non-operating condition, that is when it is not housed in a mould, is generally indicated 1; in order to simplify the drawing, the usual removable tip with the outlet aperture through which the plastics material is injected into the mould, is not shown, this tip being removable to enable it to be replaced thereby allowing changes in the outlet orifice according to production requirements.

The nozzle 1 comprises a tubular body 2 with an inner channel 3 for the plastics material to be injected, which extends from an inlet 3a intended to be connected to the supply of plastics material to an outlet 3b for receiving the aforesaid removable tip.

A groove 8 is formed along a generatrix of the outer wall 4 of the tubular body 2 in correspondence with a notch 5 in the base 6 of the nozzle for housing the end portion of a thermocouple T and its wire 10; in order to perform this task satisfactorily, the groove 8 has a radial depth greater than the dimensions of the wire 10.

In order to simplify the drawings, in this example the groove 8 is rectilinear and does not have an oblique end hole as described earlier. It should be pointed out, however, that the measuring end 10a of the thermocouple wire is near the outlet 3b of the tubular body, so as to enable the temperature to be measured close to the point at which the plastics material leaves the nozzle.

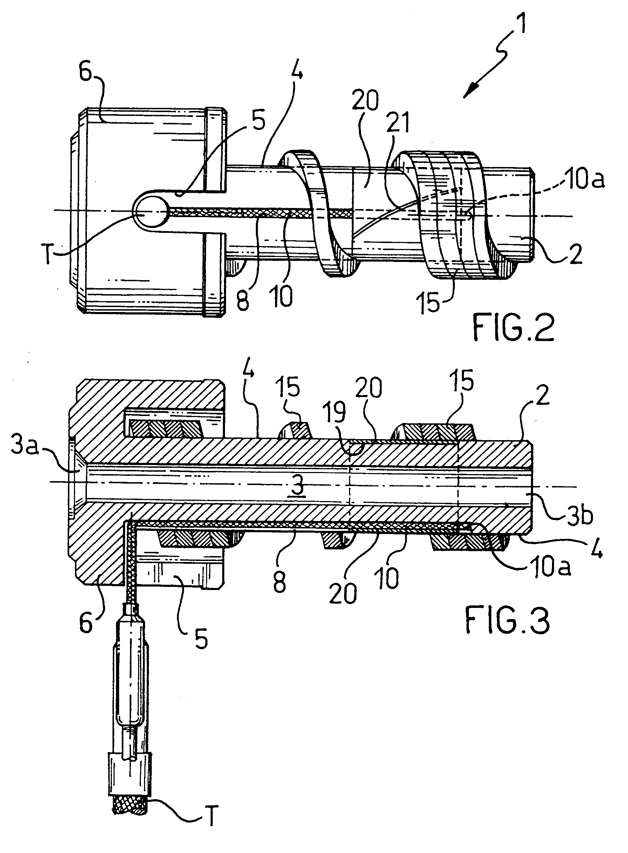

An electrical resistance 15 is also provided for heating the tubular body of the nozzle; it is shown in this example as a square-section conductor element in a helical winding around the tubular body. It should be noted, in order to ensure that the temperature is evenly distributed along the latter, (see Figure 3) how the pitch of the central portion of the helical winding of the wire differs from that of the end portions. Such an arrangement enables more heat to flow to the respective end portions, reaching the central portion by conduction and thereby contributing to evenly distributing the temperature along the tubular body 2.

In addition, an annular lowered portion 19 is formed in the outer wall 4 near the end 10a of the thermocouple wire 10; a resilient band 20 is fitted around this lowered portion. In particular, the band 20 has a split 21 providing the resilience and is preferably made of metal; it exerts a clamping force in a radial direction relative to the tubular body, which can be selected in accordance with the type of nozzle and the application for which it is being used; in fact, it is clear that careful selection of material and dimensions (especially the thickness and width in cross section) enables bands of differing rigidity to be obtained which are able to exert stronger or weaker radial clamping forces.

Furthermore, since in this example the thermocouple wire 10 is rectilinear, the split 21 in the band is inclined relative to a generatrix so as to enable the band to act constantly on the thermocouple wire 10 even if it slips round within the annular lowered portion. Finally, it should also be pointed out that in this case, as may be seen easily from Figures 2 and 3, the dimensions of the cross section of the band are substantially the same as those of the annular lowered portion in which it is housed; this feature gives the invention several advantages which will be explained in greater detail below.

From a functional point of view, that is as far as its function in the moulding process itself is concerned, the nozzle 1 of the invention behaves substantially like prior art nozzles and this aspect will not therefore be described in detail.

What must be emphasized, however, are the considerable advantages resulting from the introduction of the band 20 as the element for fixing the thermocouple wire; first of all, it should be pointed out that the clamping action exerted by the band in cooperation with the groove 8 enables contact between the wire 10, and in particular its measuring end 10a, and the outer wall 4 of the tubular body 2 to be constantly maintained at its optimum level during the moulding process. It must be emphasized that this result is achieved notwithstanding the lack of space due to the presence of the electrical resistance.

It should further be pointed out that all this is achieved without interfering with the moulding functions of the nozzle, as briefly mentioned earlier.

The fact that the cross section of the band is substantially the same as that of the lowered portion in which it is housed, makes it possible to provide an element for clamping the thermocouple wire which does not interfere with the mounting of the electrical resistance; this advantage is particularly evident in the variant illustrated in Figure 4.

This figure relates in fact to a nozzle having an electrical resistance constituted by a sleeve 15 coupled to the tubular body 2; since this coupling usually involves force fitting, the outer wall 4 of the tubular body 2 must not have any projections which would hinder the fitting of the sleeve. This demonstrates why the dimensions of the element for fixing the thermocouple wire, in this case the band, must not exceed those of the annular lowered portion.

At the same time, however, the wall 4 of the tubular body must retain a certain structural continuity to ensure that the heat flowing from the electrical resistance to the tubular body is distributed as evenly as possible.

In other words, it is clear that the presence of the band 20 and the lowered portion 19 is itself a structural discontinuity in the tubular body which offers some thermal resistance to the aforesaid flow of heat (consider, for example the resistance offered by the junctions between (juxtaposed surfaces); however, this thermal resistance can be limited by careful selection of the material of which the band is made, preferably a metal, and of the machining tolerances of the band and of the lowered portion: it is advisable in particular that, once fitted, the outer surface of the band should be as closely aligned as possible with the outer wall of the tubular body so as to avoid the formation of an annular space between it and the sleeve which would lead to convective resistance to the transmission of heat.

Further advantage provided by the invention consists in not altering substantially the mechanical characteristics of the nozzle; it must be remembered that the molten plastics material flowing through the channel 3 during the injection step of the moulding process is fed under some pressure so the tubular body 2 must be able to withstand the stress imposed by this pressure. The annular lowered portion 19 without doubt weakens the structure of the tubular body and it is thus important that its dimensions, especially its radial depth, are compatible with the forces acting on the body; it is therefore important that the dimensions of the clamping element may be altered with ease. The band provides this possibility efficiently as its shape and resilience can be chosen in accordance with each and every application of the nozzle. It is therefore clear that the width of the band shown in the drawings may differ from that described above, also to the extent of being shaped more similarly to a ring. Another important aspect of the invention consists in the fact that the band provides a simple element for fixing the thermocouple wire; this simplicity, concerning either the structure and the operation of the band, means that the manufacturing cost of the band is highly competitive this being reflected advantageously on the nozzle as a whole, and also contributes considerably to simplifying maintenance operations.

It is clear that the elasticity of the band enables it to be easily and rapidly removed (for example by inserting the tip of a screwdriver in the split 21 so as to deform the band slightly and be able to slip it off the tubular body 2), either in order to replace it or in order to replace the thermocouple or to carry out any maintenance operations on the nozzle.

Although numerous advantages the embodiment of the invention considered above have been described, it is clear that this does not exclude variations from what has been described, which, however, fall within the general scope of the invention. In other words, for example, the band described above could also be applied to thermocouple wires which are not rectilinear but helical, or which, for example, have their measuring end inserted in an inclined hole as is frequently the case in the prior art.

Moreover, it must be pointed out briefly that it is possible to use more than one band on the same nozzle in relation with different moulding conditions, that is according to the type of mould on which the nozzle is to be fitted; naturally, this will depend on the dimensions of the band itself and on the length of the tubular body on which the different units were to be fitted.

Furthermore, the possibility of clamping the thermocouple wire 10 even when this is simply applied to the outer wall 4 of the tubular body 2, without the assistance of a groove or similar seat formed in the wall, should not be ruled out. In order better to understand this point, we refer to the case illustrated in Figure 4, that is to a nozzle with an electrical resistance formed as a sleeve; it is easy to see that the aforesaid groove could be formed on the inner surface of the sleeve.

The thermocouple wire could then be housed in the groove in the sleeve and thus applied to the outer wall of the tubular body; in addition, in order to measure the temperature correctly, it would be possible to arrange the measuring end 10a of the wire 10 directly in the lowered portion 19, with the band holding it tight therein. One way of resolving the problem caused by fitting the sleeve-type electrical resistance to the tubular body (since, clearly, the former can no longer slide freely along the full length of the latter) would be to make the sleeve in two connectable portions with the lowered portion within them, in a similar manner to that seen with the groove in the sleeve.

In any case this latest arrangement, that is a sleeve in two portions, could also advantageously be used for bands other than the elastic one considered so far; the invention does not rule out the use of inelastic bands such as, for example, ones having clamping screws (similar to those commonly known as "hose clamp") which would also prevent the heating resistance from sliding on the tubular body.

Finally, it should not be forgotten that the aforesaid remarks on possible alternatives proposed in relation to a sleeve-shaped resistance, must also be considered as applicable "mutatis mutandis" in the case of an electrical resistance consisting of a helical wound conductor element.

## Claims

1. A nozzle for the injection moulding of plastics materials, including a tubular body (2) through which the plastics material to be injected is intended to flow and along the outer wall (4) of which extends the wire (10) of a wire thermocouple (T), an electrical resistance (15) being mounted exteriorly around the tubular body (2), characterised in that it includes a band (20) arranged around the tubular body (2) in a position interposed between the latter and the electrical resistance (15) and fit to exert a clamping action on the wire (10) of the thermocouple (T) against the tubular body (2).

2. A nozzle according to Claim 1, characterised in that the said band (20) is of an elastic type, made of metal and provided with a split (21).

3. A nozzle according to any one of Claims 1 or 2, characterised in that the wire (10) of the thermocouple (T) and the band (20) are housed respectively in a groove (8) and in a lowered portion (19) formed in the outer wall (4) of the tubular body (2).

4. A nozzle according to any one of Claims 1 to 3, characterised in that the electrical resistance (15) includes a sleeve mounted coaxially to the tubular body (2) and fitted to the outer wall thereof.

5. A nozzle according to any one of Claims 1 to 3, characterised in that the said resistance (15) includes a conductor element in a helical winding around the tubular body (2).

6. A nozzle according to Claim 5, characterised in that the conductor element is in a helical winding with a different pitch in the central region of the tubular body to that of the ends thereof.

## Patentansprüche

1. Düse zum Spritzgießen von Kunststoffen mit einem rohrförmigen Körper (2), durch den das einzuspritzende Kunststoffmaterial fließen soll, auf dessen Außenwand (4) sich der Draht (10) eines Thermoelementes (T) erstreckt und der von einem elektrischen Widerstand (15) umgeben ist,
**dadurch gekennzeichnet, daß**
zwischen dem Rohrkörper (2) und dem elektrischen Widerstand (15) ein Band (20) vorgesehen ist, das um den Rohrkörper (2) herumgelegt und an diesen so angepaßt ist, daß es eine Klemmwirkung auf den Draht (10) des Thermoelementes (T) gegen den Rohrkörper (2) ausübt.

2. Düse nach Anspruch 1, dadurch gekennzeichnet, daß das Band (20) ein elastisches Band ist, das aus Metall hergestellt und mit einem Schlitz (21) versehen ist.

3. Düse nach Anspruch 1 oder 2, dadurch gekennzeichnet, daß der Draht (10) des Thermoelementes (T) und das Band (20) in einer Nut (8) bzw. in einem ausgenommenen Bereich (19) in der Außenwand (4) des rohrförmigen Körpers (2) untergebracht sind.

4. Düse nach einem der Ansprüche 1 bis 3, dadurch gekennzeichnet, daß der elektrische Widerstand (15) eine Hülse aufweist, die koaxial zu dem Rohrkörper (2) befestigt ist und an dessen Außenwand (4) angepaßt ist.

5. Düse nach einem der Ansprüche 1 bis 3, dadurch gekennzeichnet, daß der Widerstand (15) ein Leiterelement aufweist, das wendelförmig um den rohrförmigen Körper (2) herumgewunden ist.

6. Düse nach Anspruch 5, dadurch gekennzeichnet, daß das Leiterelement wendelförmig, aber mit einer verschiedenen Steigung im Mittelbereich und an den Enden des rohrförmigen Körpers ausgebildet ist.

## Revendications

1. Buse de moulage par injection de matière plastique, comprenant un corps tubulaire (2) par lequel la matière plastique à injecter est destinée à s'écouler et le long de la paroi externe (4) duquel s'étend le fil (10) d'un thermocouple (T) à fil, une résistance électrique (15) étant montée à l'extérieur autour du corps tubulaire (2), caractérisée en ce qu'elle comporte une bande (20) disposée autour du corps tubulaire (2) en position comprise entre celui-ci et la résistance électrique (15) et ajustée afin qu'elle exerce un effet de serrage sur le fil (10) du thermocouple (T) contre le corps tubulaire (2).

2. Buse selon la revendication 1, caractérisée en ce que la bande (20) est de type élastique, formée de métal et ayant une séparation (21).

3. Buse selon l'une des revendications 1 et 2, caractérisée en ce que le fil (10) du thermocouple (T) et la bande (20) sont logés respectivement dans une gorge (8) et dans une partie abaissée (19) formées dans la paroi externe (4) du corps tubulaire (2).

4. Buse selon l'une quelconque des revendications 1 à 3, caractérisée en ce que la résistance électrique (15) possède un manchon monté coaxialement sur le corps tubulaire (2) et ajusté sur la paroi externe de celui-ci.

5. Buse selon l'une quelconque des revendications 1 à 3, caractérisée en ce que la résistance (15) comporte un élément conducteur dans un enroulement hélicoïdal formé autour du corps tubulaire (2).

6. Buse selon la revendication 5, caractérisée en ce que l'élément conducteur est forme dans un enroulement hélicoïdal ayant un pas différent dans la région centrale du corps tubulaire et aux extrémités de celui-ci.
